# EUROPÄISCHE PATENTSCHRIFT

(11) **EP 2 441 977 B1**
(45) Veröffentlichungstag und Bekanntmachung des Hinweises auf die Patenterteilung: **19.06.2013**
(21) Anmeldenummer: 11172506.5
(22) Anmeldetag: 04.07.2011
(51) Int. Cl.: F16H 1/36, F16H 57/08

(54) **Planetentrieb mit einem Satz erster Planetenräder und mit einem Satz zweiter Planetenräder**
Planetary gear with a first set of planet wheels and a second set of planet wheels
Train épicycloïdal doté d'un premier ensemble de roues épicycloïdales et d'un deuxième ensemble de roues épicycloïdales

(30) Priorität: 18.10.2010 DE 102010048838
(43) Veröffentlichungstag der Anmeldung: 18.04.2012
(73) Patentinhaber: Schaeffler Technologies AG & Co. KG, 91074 Herzogenaurach (DE)
(72) Erfinder: Smetana, Tomas, 91074 Herzogenaurach (DE); Wiesinger, Fritz, 91560 Heilsbronn (DE)

(56) Entgegenhaltungen:
- CN-A- 1 120 136
- CN-U- 2 060 831
- CN-Y- 2 268 149
- DE-A1- 4 029 373
- JP-U- 49 139 475

## Beschreibung

### Gebiet der Erfindung

Die Erfindung betrifft einen Planetentrieb wenigstens mit einem ersten Satz Planetenräder, mit einem zweiten Satz Planetenräder, mit mindestens einem für beide Sätze gemeinsamen Planetenträger, wobei die Planetenräder des ersten Satzes jeweils mittels wenigstens eines ersten Wälzlagers auf einem ersten Planetenbolzen um eine erste Rotationsachse relativ zu dem Planetenträger drehbar gelagert sind und dabei jedes Planetenrad des ersten Satzes mit einem Planetenrad des zweiten Satzes im Zahneingriff steht, und wobei die Planetenräder des zweiten Satzes jeweils mittels zumindest eines zweiten Wälzlagers auf einem zweiten Planetenbolzen um eine zweite Rotationsachse relativ zu dem Planetenträger drehbar gelagert sind und ein Planetengetriebe mit mindestens einem derartigen Planetentrieb.

### Hintergrund der Erfindung

Ein derartiger Planetentrieb ist in DE 40 29 373 C2 näher beschrieben. Derartige Planetentriebe werden beispielsweise in Planetengetrieben eingesetzt, in denen die Planetenräder eines ersten Satzes mit der Innenverzahnung eines Hohlrades und die Planetenräder eines zweiten Satzes mit einem Sonnenrad im Zahneingriff stehen. Jeweils ein Planetenrad des ersten Satzes steht mit einem Planetenrad des zweiten Satzes im Zahneingriff und bildet ein Paar. Von den Paaren sind in gattungsgemäßen Planetengetrieben in der Regel drei oder mehr Paare am Umfang des Sonnenrades verteilt angeordnet. Im Gegensatz zu einfachen Planetengetrieben, in denen ein einziger Satz Planetenräder zugleich mit einem Sonnenrad und mit einem Hohlrad im Zahneingriff steht, weist also der Planetentrieb der betrachteten Gattung eine weitere Planetenstufe auf. Die miteinander im Zahneingriff stehenden Planetenräder der Planetensätze des gattungsgemäßen Planetengetriebes weisen vorzugsweise die gleichen Abmessungen und gleiche Geometrien ihrer Verzahnungen auf, so dass sich dadurch zwischen jedem im Zahneingriff stehenden Paar Planetenräder in der zusätzlichen Planetenstufe eine in Übersetzung von i = 1 ergibt. Die Drehzahlen jedes der miteinander im Zahneingriff stehenden Planetenräder eines Paares sind deshalb bei Betrieb des Planetengetriebes untereinander gleich groß. Ihr Wert entspricht in dem Fall nur der Hälfte der Drehzahlen der Planetenräder des erwähnten einfachen Planetentriebs von gleicher Baugröße. Die gleiche Baugröße heißt für das gattungsgemäße Getriebe, dass zumindest die Verzahnungsdaten des Hohlrades und die der Verzahnung der Planetenräder, welche mit dem Hohlrad im Zahnengriff stehen, mit den Verzahnungsdaten des Hohlrades und der mit diesem im Zahneingriff stehenden Planetenräder der einfachen Planetengetriebe übereinstimmen, so dass gleiche Übersetzungsverhältnisse zwischen dem jeweiligen Hohlrad und den Planetenrädern vorherrschen.

Die gattungsgemäßen Planetentriebe werden deshalb häufig in Koppelgetrieben anstelle von mehreren gekoppelten einfachen Planetentrieben eingesetzt, weil sie statt derer axial kurz bauen und weil die Drehzahlen der Planetenräder und damit die Drehzahlen in den Lagerungen der Planetenräder reduziert werden können.

Darüber hinaus sind die gattungsgemäßen Planetengetriebe in sogenannten Reduziergetrieben mit Ravigneaux-Sätzen vorgesehen, mit denen ebenfalls mehrere gekoppelte einfache Planetentriebe abgelöst werden können, weil sie statt derer axial kurz bauen und weil mit ihnen durch Feststellen oder Abbremsen der Wellen des Planetengetriebes verschieden Betriebszustände geschaltet werden können. Der klassische Ravigneaux-Satz weist zwei unterschiedlich große Sonnenräder auf. Die ersten Planetenräder eines ersten Planetensatzes sind sogenannte lange Planetenräder, die mit der Innenverzahnung eines Hohlrades, mit dem großen der Sonnenräder und mit Planetenrädern eines zweiten Planetensatzes im Zahneingriff stehen. Zweite Planetenräder des zweiten Planetensatzes stehen mit dem kleineren der Sonnenräder und mit den Planetenrädern des ersten Planetensatzes im Zahneingriff. Da jeweils ein Planetenrad des ersten Planetensatzes mit einem Planetenrad des zweiten Planetensatzes im Zahneingriff steht und ein Paar bildet, sind auch diese Planetentriebe bzw. Planetengetriebe der betrachteten Gattung zugeordnet und der gleichen Problematik unterworfen.

In Lagerungen für Planetenräder mit hohen Drehzahlen sind die Rollen in Käfigen zueinander auf Abstand gehalten. Die Käfige und die Wälzkörper sind höchsten Anforderungen ausgesetzt, da außer den hohen Drehzahlen auch noch Fliehkräfte auf die Lagerstelle wirken. Die Fliehkräfte entstehen beim Umlauf der Planeten auf einer Umlaufbahn um die Rotationsachse. Die Festigkeit und Genauigkeit der Ausführung der Lager sind hoch. Dementsprechend sind diese Wälzlager teuer.

Beurteilungskriterium für die Wahl der Schmierstoffe bzw. für Drehzahlgrenzen eines Wälzlagers ist der Durchmesser-Drehzahl-Kennwert Dieser Kennwert wird im Katalog HR1 der Schaeffler KG vom Januar 2006 in der Beschreibung der technischen Grundlagen im Kapitel "Schmierung" auch als Drehzahlkennwert bezeichnet und ist das Produkt aus Drehzahl und Teilkreisdurchmesser und ist außerdem abhängig vom Lagertyp. Dieser Kennwert ist ein Wert, der z.B. für die Auswahl des Schmierfettes in Abhängigkeit von Belastung und Drehzahl hinzugezogen wird. Die Grenzwerte für diesen Kennwert liegen je nach Lagertyp zwischen 350 000 und 600 000. Der Wert ist einerseits wichtig für die Lebensdauer des Schmierstoffes und damit für die Lebensdauer Wälzlagers.

Die Reibung innerhalb eines Wälzlagers ist unter anderem auch abhängig von der Belastung, den Temperaturen, der Drehzahl und von der Viskosität des Schmierstoffes. Im Fachbuch "Wälzlagerpraxis" Brändlein, Eschmann et al, herausgegeben von Vereinigte Fachbuchverlage GmbH Ausgabe 1995, ist dazu im Kapitel "Reibung, Temperatur und Schmierung" auf Seite 210 ausgeführt: "Der Widerstand, den ein Wälzlager seiner Drehung entgegensetzt, setzt sich aus der Rollreibung, der Gleitreibung und der Schmierstoffreibung zusammen." Weiter heißt es: "Bedeutung erhält die Reibung dadurch, dass sie die im Lager entstehende Wärme bestimmt und so die Temperatur der Lagerteile und des Schmierstoffs beeinflusst." Auf Seite 213 heißt es dazu im gleichen Kapitel weiter: "Die Schmierstoffreibung in einem Wälzlager setzt sich aus der inneren Reibung des Schmierstoffs an den Kontaktstellen und der bei Schmierstoffüberschuss und höheren Drehzahlen auftretenden Plansch- und Walkarbeit zusammen. Die gesamte Schmierstoffreibung hängt in erster Linie von der Menge und Zähigkeit des Schmierstoffs ab. Bei kleineren Drehzahlen ist sie im allgemeinen gering. Sie erhöht sich jedoch in Abhängigkeit von der Ölviskosität bzw. der Fettkonsistenz mit wachsender Drehzahl deutlich." Demnach sind die maximalen Drehzahlen, mit denen ein Wälzlager betrieben werden kann, auch von der Wahl des Schmierstoffes abhängig. Je höher die Anforderungen an die Gebrauchsdauer bei hohen Drehzahlen sind, umso höher sind auch die Kosten für die einzusetzenden Schmierstoffe. Darüber hinaus können sich in einem System, wie in einem Getriebe, in dem verschiedene Schmierstellen aus einem gemeinsamen Schmierstoffreservoir versorgt werden, von Schmierstelle, z.B. Wälzlager, zu Schmierstelle, z.B. Zahneingriff, unterschiedliche Anforderungen an die Zusammensetzung des Schmierstoffs bzw. an dessen Additive ergeben, so dass bei der Wahl der Schmierstoffe Kompromisse eingegangen werden müssen, die beispielsweise zu häufigem Ölwechsel führen können.

In Planetentrieben elektromotorisch angetriebener Einheiten können Planetenräder mit Drehzahlen bis zu 20 000 U/min drehen. Die Auslegung der Planetenlagerstellen stellt deshalb für den Fachmann eine besondere Herausforderung dar.

### Beschreibung der Erfindung

Die Aufgabe der Erfindung ist es daher, Planetenlagerungen für gattungsgemäße Planetentriebe, insbesondere für Planetentriebe in unabhängigen elektromotorisch betriebenen Antriebseinheiten für Kraftfahrzeuge, zu schaffen, die den besonders hohen Anforderungen bei hohen Drehzahlen der Planetenräder gewachsen sind.

Die Erfindung sieht vor, dass wenigstens einer der Planetenbolzen um eine Rotationsachse relativ zu dem Planetenträger mittels wenigstens eines Wälzlagers drehbar an/in dem Planetenträger gelagert ist. Die Rotationsachse entspricht derjenigen, um welche das Planetenrad drehbar auf diesem Planetenbolzen gelagert ist. Eine Ausgestaltung der Erfindung sieht vor, dass der Planetenbolzen beidseitig und vorzugsweise beidseitig mit jeweils mindestens einem Wälzlager gelagert ist.

Die Erfindung insbesondere Planetentriebe, in denen der erste Planetenbolzen und der zweite Planetenbolzen innerhalb des jeweiligen Paares mehrer umfangsverteilter Paare jeweils um eine Rotationsachse beide jeweils mit mindestens einem Wälzlager drehbar in dem Planetenträger gelagert sind. Eine Ausgestaltung der Erfindung sieht vor, dass das Planetenrad mit einem anderen einem zweiten Lagertyp auf dem Planetenbolzen gelagert ist als es der Planetenbolzen in dem Planetenträger ist, auf welchem dieses Planetenrad drehbar gelagert ist. Wälzlager sind ein- oder mehrreihige Lager mit Kugeln, Rollen oder Nadeln bzw. aus einer Mischung von Kugeln und Rollen. Mehrreihig heißt, dass wenigsten zwei Reihen Wälzkörper des jeweiligen Wälzlagers radial konzentrisch zueinander und/oder wenigstens zwei Reihen Wälzkörper in axialer Richtung nebeneinander um die gleiche Rotationsachse angeordnet sind. Nadeln sind Rollen mit einem Verhältnis von Rollenlänge zum Durchmesser der Rolle > 2,5. Verschiedenen Typen sind dementsprechend Kugellager, Rollen- oder Nadellager bzw. Mischformen der Typen. Verschiedenen Typen sind auch durch unterschiedliche Anzahl an Wälzkörpern oder durch unterschiedliche Anzahl an Reihen definiert.

Die Erfindung betrifft auch Planetengetriebe mit wenigstens einem Planetentrieb nach Anspruch 1 und mit wenigstens einem Hohlrad, wobei die Planetenräder des ersten Satzes mit dem Hohlrad im Zahneingriff stehen, und Planetengetriebe mit wenigstens einem Sonnenrad, wobei die zweiten Planetenräder mit dem Sonnenrad im Zahneingriff stehen. Die Erfindung betrifft demzufolge auch Planetentriebe und Getriebe mit derartigen Planetentrieben, welche als die im Kapitel "Hintergrund der Erfindung" beschriebenen Ravigneaux-Sätze ausgeführt sind. Die Erfindung betrifft außerdem eine Antriebseinheit mit wenigstens einem Elektromotor und einem Differenzial, in dem wenigstens ein Planetentrieb gemäß Erfindung zwischen dem Elektromotor und dem Differenzial angeordnet ist, wobei der Elektromotor und das Differenzial über den Planetentrieb miteinander wirkverbunden sind. Die Erfindung ist insbesondere für diese Antriebseinheiten geeignet, da Elektromotoren selbst hohe Antriebsdrehzahlen aufweisen, so dass je nach Ausführung des Getriebes in den einzelnen Planetenlagerungen hohe Drehzahlen zu erwarten sind.

Der Vorteil dieser Erfindung liegt in der Verbesserung des Wirkungsgrades der Planetenlagerungen und damit des Planetentriebs. Der Aufwand für die Schmierung der einzelnen Lagerstellen kann reduziert werden, da die Drehzahlen in den einzelnen Wälzlagern geringer werden. Im Betrieb des Planetentriebs wird der Planetenbolzen aufgrund der Lagerung mit Wälzlagern im Träger mitrotieren. Dadurch viertelt sich die Relativdrehzahl in den Planetenlagerungen gegenüber einem einfachen Planetentrieb des zuvor beschriebenen Standes der Technik und halbiert sich etwa noch einmal gegenüber dem gattungsgemäßen Stand der Technik. Die Grenzdrehzahlen der Lagerstellen werden reduziert und damit die Drehzahlkennwerte niedriger. Eine derartige Anordnung ermöglicht es, neue kurz bauende Getriebekonzepte in Antriebseinheiten mit hohen Drehzahlen zu verwirklichen, die aufgrund bisheriger Drehzahlgrenzen für Planetenlagerungen noch nicht möglich waren.

In Lagerungen für Planetenräder mit hohen Belastungen und relativ niedrigen Drehzahlen werden häufig sogenannte Vollrollensätze eingesetzt. Vollrollensätze sind Wälzlager, in denen die Rollen ohne Abstandshalter in Umfangsrichtung aneinander gereiht sind. Derartige Wälzlagerungen sind kostengünstig herzustellen, da für diese nur die Anzahl an Wälzkörpern und eine Verpackung benötigt wird. Diese Lagerungen sind jedoch für den Einsatz bei hohen Drehzahlen nicht geeignet, da die Wälzkörper aufeinander prallen und extrem aneinander reiben und somit vorzeitig verschleißen würden. Außerdem erhitzen sich die Lagerungen bei hohen Drehzahlen unzulässig. Dadurch, dass in den Planetenlagerungen der erfindungsgemäßen Planetentriebe gegenüber den gattungsgemäßen Planetentrieben des Standes der Technik im Vergleich zu einfachen Planetentrieben die Drehzahlen noch einmal in etwa halbiert sind, wird der Einsatz von Vollrollensätzen in erfindungsgemäßen Planetentrieben wieder möglich. Diese können dann in Planetenlagerungen eingesetzt werden, von denen hohe Tragzahlen gefordert werden, weil diese Planetentriebe z.B. in Antriebseinheiten mit hohen Antriebsmomenten eingesetzt sind.

### Beschreibung der Zeichnungen

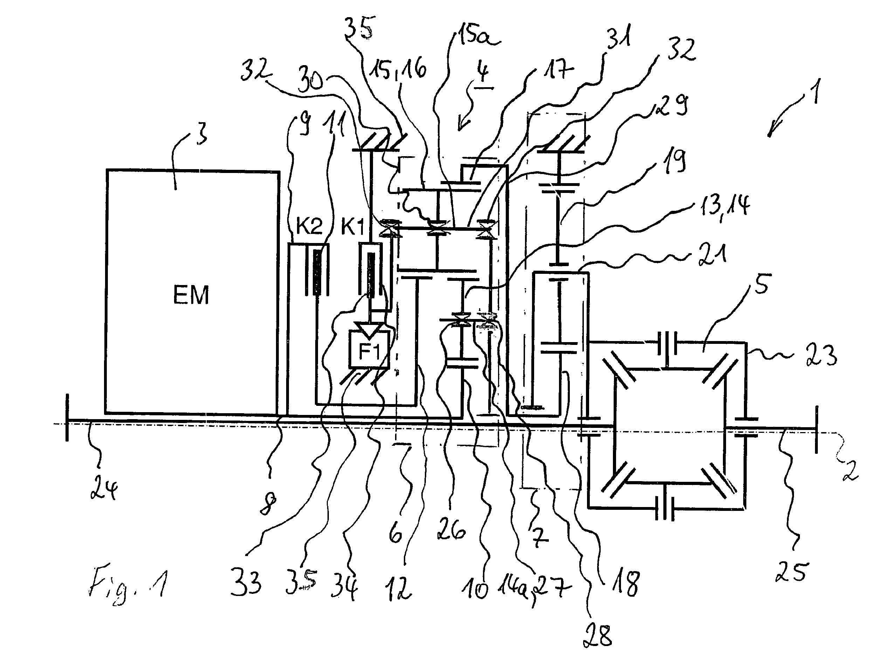

Figur 1 zeigt ein vereinfachtes Schema einer Antriebseinheit 1 hälftig längs entlang der Hauptachse 2 der Antriebseinheit 1. Die Antriebseinheit 1 ist aus einem Elektromotor 3, Kupplungen K1, K2 und F1, einem Planetengetriebe 4 und aus einem Differenzial 5 gebildet. Das Planetengetriebe 4 weist ein Ausführungsbeispiel eines erfindungsgemäßen Planetentriebs 6 aus einem Ravigneaux-Satz und einen weiteren Planetentrieb 7 gebildet.

Eine Rotorwelle 8 des Elektromotors 3 ist mit einem ersten Teil 9 der Kupplung K2 verbunden, welcher mit einem zweiten Teil 11 der schaltbaren Kupplung K2 wirkverbunden ist. Die Rotorwelle 8 ist zugleich mit einem kleinen Sonnenrad 10 des Planetentriebs 6 wirkverbunden. Der zweite Teil 11 der Kupplung K2 ist mit einem großen Sonnenrad 12 des Planetentriebs 6 verbunden. Das kleine Sonnenrad 10 steht im Zahneingriff mit drei kurzen zweiten Planetenrädern 14 eines zweiten Planetensatzes 13, von denen aber nur eines bildlich dargestellt ist. Jedes zweite Planetenrad 14 steht im Zahneingriff mit einem langen ersten Planetenrad 15 eines ersten Satzes 16, von dem auch nur eines der Planetenräder 15 bildhaft dargestellt ist. Jedes der ersten Planetenräder 15 bildet mit einem zweiten Planetenrad 14 ein Paar und steht außerdem noch mit einem Hohlrad 17 und dem großen Sonnenrad 12 im Zahneingriff.

Das Hohlrad 17 ist mit einem weiteren Sonnenrad 18 des Planetentriebs 7 um die Hauptachse 2 drehbar wirkverbunden. Das weitere Sonnenrad 18 steht im Zahneingriff mit drei oder mehr Planetenrädern 19 eines dritten Satzes 20, welcher aus drei Planetenrädern 19 gebildet ist und von dem aber nur eines bildhaft dargestellt ist. Die dritten Planetenräder 19 sind auf Planetenbolzen 21 drehbar gelagert, welche an einem ersten Planetenträger 22 fest sind. Der Planetenträger 22 ist mit einem Differenzialkorb 23 des Differenzials 5 um die Hauptachse 2 drehbar wirkverbunden. Von dem Differenzial 5 gehen zwei Abtriebswellen 24 und 25 ab, von denen die eine Abtriebswelle 24 konzentrisch durch die Rotorwelle 8 geführt ist.

Die zweiten Planetenräder 14 sind mit Wälzlagern 26 auf Planetenbolzen 27 um die Rotationsachse 14a drehbar gelagert. Die Planetenbolzen 27 sind ein- oder beidseitig mit Wälzlagern 28 in einem zweiten Planetenträger 29 um die Rotationsachse 14a drehbar gelagert. Die ersten Planetenräder 15 sind mit Wälzlagern 30 um die Rotationsachsen 15a drehbar auf Planetenbolzen 31 gelagert. Die Planetenbolzen 31 sind beidseitig mittels Wälzlagern 32 um die Rotationsachse 15a drehbar an dem zweiten Planetenträger 29 gelagert. Die Wälzlager 26, 28, 30 und 32 sind vereinfacht durch Kreuze symbolisiert.

Der zweite Planetenträger 29 ist drehbar mit einem ersten Teil 33 der Kupplung K1 verbunden. Zwischen dem ersten Teil 33 der Kupplung K1 und einem zweiten Teil 34 der Kupplung K1 besteht eine trennbare Wirkverbindung. Außerdem ist der erste Teil 33 drehbar mit einem Außenring der als Freilauf ausgebildeten Kupplung F1 wirkverbunden. Der Innenring der Kupplung F1 ist wie der zweite Teil 34 an einem Gehäuse 35 der Antriebseinheit 1 festgestellt.

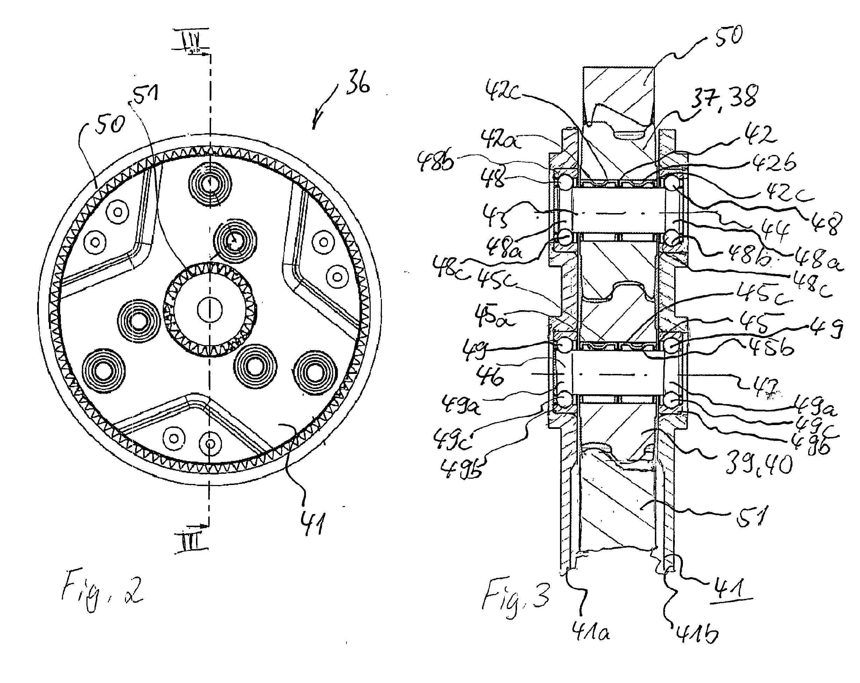

Figur 2 zeigt einen Planetentrieb 36 in einer Seitenansicht und Figur 3 zeigt den Planetentrieb 36 in einem Schnitt entlang der Linie III - III nach Figur 2. Der Planetentrieb 36 weist einen ersten Satz 37 mit drei Planetenrädern 38 und einen zweiten Satz 39 Planetenräder 40 sowie einen für beide Sätze 37 und 39 gemeinsamen Planetenträger 41 auf.

Der Planetenträger 41 ist zweiteilig aus den Trägerhälften 41a und 41b gebildet, die jeweils aus Blech geformt sind.

Die Planetenräder 38 des ersten Satzes 37, von denen wieder nur eines in Figur 3 zeichnerisch abgebildet ist, sind jeweils mittels wenigstens eines ersten Wälzlagers 42 auf einem ersten Planetenbolzen 43 um eine erste Rotationsachse 44 relativ zu dem Planetenträger 41 drehbar gelagert.

Jedes Planetenrad 38 des ersten Satzes 37 steht mit einem Planetenrad 40 des zweiten Satzes 39 im Zahneingriff. Die Planetenräder 40 des zweiten Satzes 39, von denen auch nur eins in Figur 3 dargestellt ist, sind jeweils mittels zumindest eines zweiten Wälzlagers 45 auf einem zweiten Planetenbolzen 46 um eine zweite Rotationsachse 47 relativ zu dem Planetenträger 41 drehbar gelagert.

Das erste Wälzlager 42 ist vom Lagertyp eines zweireihigen Nadellagers. Jede der Reihen Nadeln 42a und Nadeln 42b des Wälzlagers 42 ist jeweils in einem separaten Käfig 42c geführt. Das zweite Wälzlager 45 ist auch vom Lagertyp eines zweireihigen Nadellagers. Jede der Reihen Nadeln 45a und Nadeln 45b des Wälzlagers 45 ist jeweils in einem separaten Käfig 45c geführt. Die Wälzlager 42 und 45 sind gleich.

Die Planetenbolzen 43 des ersten Satzes 37 sind jeweils beidseitig mittels je eines dritten Wälzlagers 48 relativ zu dem Planetenträger 41 um die gleiche Rotationsachse 44 wie die Planetenräder 38 des gleichen Satzes 37 drehbar an jeweils einer Trägerhälfte 41a bzw. 41b des Planetenträgers 41 gelagert. Die Planetenbolzen 46 des zweiten Satzes 39 sind jeweils beidseitig mittels je eines dritten Wälzlagers 49 relativ zu dem Planetenträger 41 und um die gleiche Rotationsachse 47 wie die Planetenräder 40 des gleichen Satzes 39 drehbar in jeweils einer Trägerhälfte 41a bzw. 41b des Planetenträgers 41 gelagert.

Die Wälzlager 48 und 49 sind gleich und von einem anderen Lagertyp als die Wälzlager 42 und 45. Der als einreihiges Kugellager bezeichnete Lagertyp der Wälzlager 48 und 49 ist durch eine an dem jeweiligen Planetenbolzen 43 bzw. 46 ausgebildete Innenlaufbahn (Kugelrille) 48a bzw. 49a, einen Außenring 48b bzw. 49b sowie durch eine Reihe Kugeln 48c bzw. 49c gebildet.

Der Planetentrieb 36 weist außerdem Hohlrad 50 auf, mit dem die Planetenräder 38 ersten Satzes 37 im Zahneingriff stehen und ein Sonnenrad 51 auf, mit dem die zweiten Planetenräder 40 im Zahneingriff stehen.

### Bezugszeichen

- 1: Antriebseinheit
- 2: Hauptachse
- 3: Elektromotor
- 4: Planetengetriebe
- 5: Differenzial
- 6: Planetentrieb
- 7: Planetentrieb
- 8: Rotorwelle
- 9: erste Hälfte der Kupplung K2
- 10: kleines Sonnenrad
- 11: zweiter Teil der Kupplung K2
- 12: großes Sonnenrad
- 13: zweiter Satz
- 14: zweites Planetenrad
- 14a: Rotationsachse
- 15: erstes Planentenrad
- 15a: Rotationsachse
- 16: erster Satz
- 17: Hohlrad
- 18: weiteres Sonnenrad
- 19: drittes Planetenrad
- 20: dritter Satz
- 21: Planetenbolzen
- 22: erster Planetenträger
- 23: Differenzialkorb
- 24: Abtriebswellen
- 25: Abtriebswellen
- 26: Wälzlager
- 27: Planetenbolzen
- 28: Wälzlager
- 29: zweiter Planetenträger
- 30: Wälzlager
- 31: Planetenbolzen
- 32: Wälzlager
- 33: erster Teil der Kupplung K1
- 34: zweiter Teil der Kupplung K1
- 35: Gehäuse
- 36: Planetentrieb
- 37: erster Satz
- 38: Planetenrad
- 39: zweiter Satz
- 40: Planetenrad
- 41: Planetenträger
- 41 a: Trägerhälfte
- 41 b: Trägerhälfte
- 42: Wälzlager
- 42a: Nadel
- 42b: Nadel
- 42c: Käfig
- 43: Planetenbolzen
- 44: Rotationsachse
- 45: Wälzlager
- 45a: Nadel
- 45b: Nadel
- 45c: Käfig
- 46: Planetenbolzen
- 47: Rotationsachse
- 48: Wälzlager
- 48a: Innenlaufbahn
- 48b: Außenring
- 48c: Kugeln
- 49: Wälzlager
- 49a: Innenlaufbahn
- 49b: Außenring
- 49c: Kugel

## Patentansprüche

1. Planetentrieb (6, 36) wenigstens mit einem ersten Satz (16, 37) Planetenräder (15, 38), mit einem zweiten Satz (13, 39) Planetenräder (14, 40), mit mindestens einem für beide Sätze (13, 16, 37, 39) gemeinsamen Planetenträger (29, 41), wobei die Planetenräder (15, 38) des ersten Satzes (16, 37) jeweils mittels wenigstens eines ersten Wälzlagers (30, 42) auf einem ersten Planetenbolzen (31, 43) um eine erste Rotationsachse (15a, 44) relativ zu dem Planetenträger (29) drehbar gelagert sind und dabei jedes Planetenrad (15, 38) des ersten Satzes (16, 37) mit einem Planetenrad (14, 40) des zweiten Satzes (13, 39) im Zahneingriff steht, und wobei die Planetenräder (14, 40) des zweiten Satzes (13, 39) jeweils mittels zumindest eines zweiten Wälzlagers (26, 45) auf einem zweiten Planetenbolzen (27, 46) um eine zweite Rotationsachse (14a, 47) relativ zu dem Planetenträger (29, 41) drehbar gelagert sind, dass die Planetenbolzen (27, 31, 43, 46) der Sätze (13, 16, 37, 39) jeweils mittels wenigstens eines dritten Wälzlagers (28, 32, 48, 49) relativ zu dem Planetenträger (29, 41) um die gleiche Rotationsachse (14a, 15a, 44, 47) wie die Planetenräder (14, 15, 38. 40) des gleichen Satzes (13, 16, 37, 39) drehbar an dem Planetenträger (29, 41) gelagert sind, **dadurch gekennzeichnet, dass** das erste Wätzlager (30, 42) und das zweite Wälzlager (26, 45) gleich und jeweils vom Lagertyp eines zweireihigen Nadellagers sind wobei ein erstes zweireihige Nadellager des ersten Wälzlagers (30, 42) aus einer ersten Reihe Nadeln (42a) und aus einer zweiten Reihe Nadeln (42b) gebildet ist und wobei die erste Reihe Nadeln (42a) und die zweite Reihe Nadeln (42b) jeweils in einem separaten ersten Käfig (42c)geführt sind, und dass ein zweites zweireihiges Nadellager des zweiten Wälzlagers (26, 45) aus einer dritten Reihe Nadeln (45a) und einer vierten Reihe Nadeln (45b) gebildet ist und wobei die dritte Reihe Nadeln (45a) und die vierte Reihe Nadeln (45b) jeweils in einem separaten zweiten Käfig (45c) geführt sind.

2. Planetentrieb nach Anspruch 1, **dadurch gekennzeichnet, dass** die ersten Planetenbolzen (31, 43) des ersten Satzes (16, 37) und die zweiten Planetenbolzen (27, 46) des zweiten Satzes (13, 39) jeweils mittels eines dritten Wälzlagers (28, 32, 48, 49) drehbar an dem Planetenträger gelagert sind.

3. Planetentrieb nach Anspruch 1 oder 2, **dadurch gekennzeichnet, dass** die Planetenräder (38, 40) wenigstens eines der Sätze (37, 39) mit einem ersten Lagertyp auf dem jeweiligen Planetenbolzen (43, 46) des gleichen Satzes (37, 39) gelagert sind, der ein anderer Lagertyp ist, als ein zweiter Lagertyp, mit denen die jeweiligen Planetenbolzen (43, 46) des gleichen Satzes (37, 39) in dem Planetenträger (41) gelagert sind.

4. Planetengetriebe (4) mit wenigstens einem Planetentrieb (6, 36) nach Anspruch 1 und mit wenigstens einem Hohlrad (17, 50), wobei die Planetenräder (15, 38) des ersten Satzes (16, 37) mit dem Hohlrad (50) im Zahneingriff stehen.

5. Planetengetriebe nach Anspruch 4, mit wenigstens einem Sonnenrad (51), wobei die zweiten Planetenräder (14, 40) mit dem Sonnenrad (51) im Zahneingriff stehen.

## Claims

1. Planetary drive (6, 36) at least having a first set (16, 37) of planet gears (15, 38), having a second set (13, 39) of planet gears (14, 40), having at least one planet carrier (29, 41) which is common to both sets (13, 16, 37, 39), wherein the planet gears (15, 38) of the first set (16, 37) are in each case mounted on a first planet journal (31, 43), so as to be rotatable about a first axis of rotation (15a, 44) relative to the planet carrier (29), by means of at least one first rolling bearing (30, 42), and here, each planet gear (15, 38) of the first set (16, 37) is in meshing engagement with a planet gear (14, 40) of the second set (13, 39), and wherein the planet gears (14, 40) of the second set (13, 39) are in each case mounted on a second planet journal (27, 46), so as to be rotatable about a second axis of rotation (14a, 47) relative to the planet carrier (29, 41), by means of at least one second rolling bearing (26, 45), wherein the planet journals (27, 31, 43, 46) of the sets (13, 16, 37, 39) are in each case mounted on the planet carrier (29, 41), so as to be rotatable relative to the planet carrier (29, 41) about the same axis of rotation (14a, 15a, 44, 47) as the planet gears (14, 15, 38, 40) of the same set (13, 16, 37, 39), by means of at least one third rolling bearing (28, 32, 48, 49), **characterized in that** the first rolling bearing (30, 42) and the second rolling bearing (26, 45) are identical and are in each case of two-row needle-roller bearing type, wherein a first two-row needle-roller bearing of the first rolling bearing (30, 42) is formed from a first row of needles (42a) and from a second row of needles (42d), and wherein the first row of needles (42a) and the second row of needles (42b) are guided in each case in a separate first cage (42c), and **in that** a second two-row needle-roller bearing of the second rolling bearing (26, 45) is formed from a third row of needles (45a) and a fourth row of needles (45d), and wherein the third row of needles (45a) and the fourth row of needles (A5b) are guided in each case in a separate second cage (45c).

2. Planetary drive according to Claim 1, **characterized in that** the first planet journals (31, 43) of the first set (16, 37) and the second planet journals (27, 46) of the second set (13, 39) are in each case rotatably mounted on the planet carrier by means of a third rolling bearing (28, 32, 48, 49).

3. Planetary drive according to Claim 1 or 2, **characterized in that** the planet gears (38, 40) of at least one of the sets (37, 39) are mounted on the respective planet journal (43, 46) of the same set (37, 39) by means of a first bearing type which is a different bearing type than a second bearing type by means of which the respective planet journals (43, 46) of the same set (37, 39) are mounted in the planet carrier (41).

4. Planetary gear set (4) having at least one planetary drive (6, 36) according to Claim 1 and having at least one internal gear (17, 50), wherein the planet gears (15, 38) of the first set (16, 37) are in meshing engagement with the internal gear (50).

5. Planetary gear set according to claim 4, having at least one sun gear (51), wherein the second planet gears (14, 40) are in meshing engagement with the sun gear (51).

## Revendications

1. Train épicycloïdal (6, 36) comprenant au moins un premier jeu (16, 37) de pignons planétaires (15, 38), un deuxième jeu (13, 39) de pignons planétaires (14, 40), au moins un porte-satellites (29, 41) commun aux deux jeux (13, 16, 37, 39), les pignons planétaires (15, 38) du premier jeu (16, 37) étant montés à rotation autour d'un premier axe de rotation (15a, 44) par rapport au porte-satellites (29) à chaque fois au moyen d'au moins un premier palier à roulement (30, 42) sur un premier axe de satellite (31, 43) et en l'occurrence chaque pignon planétaire (15, 38) du premier jeu (16, 37) étant en prise d'engagement denté avec un pignon planétaire (14, 40) du deuxième jeu (13, 39) et les pignons planétaires (14, 40) du deuxième jeu (13, 39) étant montés à rotation autour d'un deuxième axe de rotation (14a, 47) par rapport au porte-satellites (29, 41) à chaque fois au moyen d'au moins un deuxième palier à roulement (26, 45) sur un deuxième axe de satellite (27, 46), les axes de satellite (27, 31, 43, 46) des jeux (13, 16, 37, 39) étant montés à rotation autour du même axe de rotation (14a, 15a, 44, 47) que les pignons planétaires (14, 15, 38, 40) du même jeu (13, 16, 37, 39) sur le porte-satellites (29, 41) à chaque fois au moyen d'au moins un troisième palier à roulement (28, 32, 48, 49) par rapport au porte-satellites (29, 41), **caractérisé en ce que** le premier palier à roulement (30, 42) et le deuxième palier à roulement (26, 45) sont identiques et sont chacun du type de palier d'un palier à aiguilles à deux rangées, un premier palier à aiguilles à deux rangées du premier palier à roulement (30, 42) étant formé d'une première rangée d'aiguilles (42a) et d'une deuxième rangée d'aiguilles (42b) et la première rangée d'aiguilles (42a) et la deuxième rangée d'aiguilles (42b) étant guidées à chaque fois dans une première cage séparée (42c) et **en ce qu'**un deuxième palier à aiguilles à deux rangées du deuxième palier à roulement (26, 45) est constitué d'une troisième rangée d'aiguilles (45a) et d'une quatrième rangée d'aiguilles (45b) et la troisième rangée d'aiguilles (45a) et la quatrième rangée d'aiguilles (45b) étant guidées à chaque fois dans une deuxième cage séparée (45c).

2. Train épicycloïdal selon la revendication 1, **caractérisé en ce que** les premiers axes de satellite (31, 43) du premier jeu (16, 37) et les deuxièmes axes de satellite (27, 46) du deuxième jeu (13, 39) sont à chaque fois montés à rotation sur le porte-satellites au moyen d'un troisième palier à roulement (28, 32, 48, 49).

3. Train épicycloïdal selon la revendication 1 ou 2, **caractérisé en ce que** les pignons planétaires (38, 40) d'au moins l'un des jeux (37, 39) d'un premier type de palier sont montés sur l'axe de satellite respectif (43, 46) du même jeu (37, 39) qui est d'un autre type de palier qu'un deuxième type de palier avec lesquels les axes de satellite respectifs (43, 46) du même jeu (37, 39) sont montés dans le porte-satellites (41).

4. Transmission planétaire (4) comprenant au moins un train épicycloïdal (6, 36) selon la revendication 1 et au moins une couronne dentée (17, 50), les pignons planétaires (15, 38) du premier jeu (16, 37) étant en prise d'engagement denté avec la couronne dentée (50).

5. Transmission planétaire selon la revendication 4, comprenant au moins une roue solaire (51), les deuxièmes pignons planétaires (14, 40) étant en prise d'engagement denté avec la roue solaire (51).
